# EUROPÄISCHE PATENTANMELDUNG

(11) **EP 2 939 772 A1**
(43) Veröffentlichungstag der Anmeldung: **04.11.2015**
(21) Anmeldenummer: 15164657.7
(22) Anmeldetag: 22.04.2015
(51) Int. Cl.: B23B 31/14

(54) **FLIEHKRAFT-SPANNSYSTEM**

(30) Priorität: 22.04.2014 DE 102014105652
(71) Anmelder: Föhrenbach GmbH, 79843 Löffingen/Unadingen (DE)
(72) Erfinder: Föhrenbach, Manfred, 79843 Löffingen-Unadingen (DE)
(74) Vertreter: Westphal, Mussgnug & Partner Patentanwälte mbB

(57) **Zusammenfassung**

Die Erfindung betrifft eine Bohrspindel, aufweisend eine Bohrspindeldrehachse, ein Bohrspindelgehäuse mit einer Bohrmittelaufnahme zur Aufnahme des Bohrschaftes eines Bohrmittels sowie wenigstens ein Spannmittel zum Halten und Fixieren des Bohrschaftes entlang der Bohrspindeldrehachse, wobei das wenigstens eine Spannmittel in dem Bohrspindelgehäuse angeordnet ist und einen Berandungsbereich aufweist, der eine Durchführung zur Aufnahme des Bohrschaftes umrandet, wobei der Berandungsbereich senkrecht zu der Richtung der Bohrspindeldrehachse in dem Bohrspindelgehäuse verschiebbar und/oder elastisch verformbar angeordnet ist.

## Beschreibung

Die vorliegende Erfindung betrifft eine Bohrspindel, insbesondere eine Hochfrequenz-Spindel nach dem Oberbegriff des Patentanspruchs 1, sowie ein Verfahren zum Einspannen eines Bohrschaftes in eine Bohrspindel nach Patentanspruch 21.

Bohrspindeln haben im Werkzeugmaschinenbau ein breites Anwendungsfeld. Man findet sie in Drehmaschinen, Fräsmaschinen, Schleifmaschinen, Abrichtmaschinen oder Profiliermaschinen. Häufig werden dabei auch Hochfrequenz-Spindeln verwendet. Hochfrequenz-Spindeln sind Bohrspindeln, die mit einer besonders hohen Drehzahl von wenigstens 10 000 Umdrehungen pro Minute rotieren können. Solche Spindeln sind insbesondere für die Feinbearbeitung von Werkstücken geeignet. Sie finden beispielsweise bei Dentalfräsmaschinen, Graviermaschinen oder im Bereich der Hochgeschwindigkeitszerspanung Anwendung. Hochfrequenz-Spindeln müssen einen besonders präzisen Rundlauf aufweisen, damit sie vibrationsarm betrieben werden können. Im automatisierten Bearbeitungsbetrieb muss das Bohrmittel in die Bohrspindel außerdem besonders schnell aufgenommen, eingespannt und ausgetauscht werden können.

Beim Betrieb der Spindel muss das Spannmittel den Bohrschaft sicher und verdrehfest halten können. Die im Stand der Technik bekannten Spannmittel, wie Handspannfutter oder Kraftspannfutter, die im allgemeinen drei oder mehrere um die Bohrmittelaufnahme gleichmäßig herum angeordnete Spannbacken aufweisen, welche das Bohrmittel klemmend festhalten, benötigen zusätzliche Mittel zum Austausch und zum Festklemmen, wie beispielsweise mechanische Einspannwerkzeuge, und zum Austausch Bedienpersonal, sowie zusätzliche Zeit.

Aufgabe der vorliegenden Erfindung ist es daher, eine Bohrspindel, insbesondere eine Hochfrequenz-Spindel bereitzustellen, die diese Nachteile nicht aufweist.

Diese Aufgabe wird gelöst durch eine Bohrspindel nach Patentanspruch 1 sowie ein Verfahren zum Einspannen eines Bohrschaftes in eine Bohrspindel nach Patentanspruch 21. Vorteilhafte Ausführungsformen sind in den jeweiligen Unteransprüchen angegeben.

Bei einer Bohrspindel, die eine Bohrspindeldrehachse aufweist, ein Bohrspindelgehäuse mit einer Bohrmittelauflage zur Aufnahme des Bohrschaftes eines Bohrmittels sowie wenigstens ein Spannmittel zum Halten und Fixieren des Bohrschaftes entlang der Bohrspindeldrehachse wird diese Aufgabe dadurch gelöst, dass das wenigstens eine Spannmittel in dem Bohrspindelgehäuse angeordnet ist und einen Berandungsbereich aufweist, der eine Durchführung zur Aufnahme des Bohrschaftes umrandet, wobei der Berandungsbereich senkrecht zu der Richtung der Bohrspindeldrehachse in dem Bohrspindelgehäuse verschiebbar und/oder elastisch verformbar angeordnet ist.

Dadurch, dass der Berandungsbereich, der die Durchführung zur Aufnahme des Bohrschaftes berandet, in dem Bohrspindelgehäuse verschiebbar und/oder elastisch verformbar senkrecht zu der Richtung der Bohrspindeldrehachse angeordnet ist, kann ein in der Bohrmittelaufnahme des Bohrspindelgehäuses und in der Durchführung des Spannmittels in seiner Längsrichtung entlang der Bohrspindeldrehachse aufgenommener Bohrschaft eines Bohrmittels geklemmt werden, wenn der Berandungsbereich sich verschiebt und/oder elastisch verformt, beispielsweise aufgrund der beim Rotieren der Bohrspindel auf das Spannmittel wirkenden Fliehkräfte. Dadurch wird ein Fliehkraft-Spannsystem realisiert, welches das Bohrmittel in dem Bohrspindelgehäuse eingespannt hält, während die Bohrspindel rotiert.

Zu diesem Zweck kann der Berandungsbereich, der die Durchführung zur Aufnahme des Bohrschaftes umrandet, relativ zur Bohrmittelaufnahme des Bohrspindelgehäuses verschiebbar sein. Diese Verschiebbarkeit kann beispielsweise dadurch realisiert werden, dass das wenigstens eine Spannmittel in dem Bohrspindelgehäuse selbst senkrecht zur Bohrspindeldrehachse verschiebbar angeordnet ist. Wenn sich das wenigstens eine Spannmittel in dem Bohrspindelgehäuse dann verschiebt, verschiebt sich automatisch auch sein Berandungsbereich, der die Durchführung zur Aufnahme des Bohrschaftes definiert, auch wenn dieser starr und unverschiebbar in dem Spannmittel angeordnet ist.

Der Berandungsbereich des wenigstens einen Spannmittels kann sich relativ zur Bohrmittelaufnahme des Bohrspindelgehäuses jedoch auch dadurch verschieben, dass der Berandungsbereich elastisch verschiebbar und/oder elastisch verformbar in dem wenigstens einen Spannmittel angeordnet ist. Das Spannmittel kann in diesem Fall beispielsweise fest mit dem Bohrspindelgehäuse verbunden, in dem Bohrspindelgehäuse angeordnet sein.

Ein elastisch verschiebbarer und/oder elastisch verformbarer Berandungsbereich kann beispielsweise dadurch realisiert werden, dass das Spannmittel einen Spannring aufweist und der Berandungsbereich an einem oder mehreren Stegen, die eine elastische Halterung bilden, angeformt ist, wobei der oder die Stege beispielsweise an dem Spannmittelring, der in dem Bohrspindelgehäuse angeordnet ist, befestigt sind. Die Stege sind dann beispielsweise elastisch hin und her beweglich in dem Spannring angeordnet beziehungsweise an den Spannring angeformt. Bewegt sich nun diese elastische Halterung, so bewegt sich auch der Berandungsbereich des Spannmittels. Der Berandungsbereich wird in einer besonders bevorzugten Ausführung durch zwei einander gegenüberliegend an dem Berandungsbereich angeformte Stegpaare gebildet. Dies ermöglicht eine besonders stabile, elastische Halterung des Berandungsbereichs in dem Spannring.

Um eine definierte Fixierung des Bohrschaftes entlang der Bohrspindeldrehachse zu ermöglichen, ist das wenigstens eine Spannmittel in Richtung der Bohrspindeldrehachse fixiert in dem Bohrspindelgehäuse angeordnet. Die Bohrspindel ist dabei vorteilhafterweise eine Hochfrequenz-Spindel, und das Bohrspindelgehäuse ist vorzugsweise zylinderförmig und mittig um die Bohrspindeldrehachse herum ausgebildet.

Vorzugsweise ist das wenigstens eine Spannmittel so aufgebaut, dass sein Massenschwerpunkt außerhalb der Bohrspindeldrehachse, besonders vorzugsweise außerhalb der Durchführung, angeordnet ist. Dies kann beispielsweise dadurch realisiert werden, dass an den Berandungsbereich Schwungmassen angeformt sind, die vorzugsweise beabstandet von dem Spannring angeordnet sind. Dies hat den Vorteil, dass, wenn die Bohrspindel um die Bohrspindeldrehachse rotiert, der Berandungsbereich, der die Durchführung zur Aufnahme des Bohrschaftes umrandet, sich relativ zur Bohrspindeldrehachse elastisch in dem wenigstens einen Spannmittel in Richtung Massenschwerpunkt verschieben und/oder sich elastisch verformen kann, da die Schwungmasse in Richtung auf den Spannring beweglich ist.

Das wenigstens eine Spannmittel ist daher vorteilhafterweise so in dem Bohrspindelgehäuse angeordnet, dass sich der Berandungsbereich relativ zur Bohrspindeldrehachse elastisch verschiebt und/oder sich elastisch verformt, wenn die Bohrspindel um die Bohrspindeldrehachse rotiert. Diese Verschiebung und/oder Verformung wird dadurch bewerkstelligt, dass, aufgrund des außerhalb der Bohrspindeldrehachse liegenden Massenschwerpunktes des wenigstens einen Spannmittels, die durch die Rotation verursachte Fliehkraft in Richtung auf den Massenschwerpunkt wirkt und dabei den Berandungsbereich in Richtung auf den Massenschwerpunkt verschiebt, und/oder ihn verformt.

Ist das wenigstens eine Spannmittel selbst senkrecht zu der Richtung der Bohrspindeldrehachse in dem Bohrspindelgehäuse verschiebbar, bewirkt die auf den Massenschwerpunkt wirkende Fliehkraft eine Verschiebung des ganzen Spannmittels in Richtung auf den Massenschwerpunkt hin.

Das Spannmittel ist erfindungsgemäß so aufgebaut, dass der Berandungsbereich sich verschiebt und/oder elastisch verformt, wenn die Bohrspindel um die Bohrspindeldrehachse rotiert. Eine rein elastische Verformung des Berandungsbereichs kann auch realisiert werden, wenn der Massenschwerpunkt des wenigstens einen Spannmittels auf der Bohrspindeldrehachse liegt, die Massenverteilung um die Durchführung herum jedoch nicht rotationssymmetrisch zur Bohrspindeldrehachse angeordnet ist.

Ist in einer bevorzugten Ausführungsform der Bohrschaft in der Bohrmittelaufnahme und in der Durchführung des wenigstens einen Spannmittels aufgenommen, und rotiert die Bohrspindel um die Bohrspindeldrehachse, bewirkt die auf das wenigstens eine Spannmittel wirkende Fliehkraft, dass ein Teil der zum Bohrschaft weisenden Innenfläche des Berandungsbereichs gegen den Bohrschaft drückt, so dass der Bohrschaft in dem Bohrspindelgehäuse geklemmt und/oder eingespannt gehalten wird.

In einer bevorzugten Ausführungsform weist die Bohrspindel wenigstens ein Spannmittel auf, das zumindest teilweise aus magnetischem und / oder magnetisierbarem Material, vorzugsweise aus Eisen, besteht. Ein auf dieses Spannmittel gerichteter Elektromagnet, der beispielsweise außerhalb des Bohrspindelgehäuses angeordnet sein kann, kann dann beispielsweise eine magnetische Kraft auf dieses Spannmittel ausüben. Der Elektromagnet ist dabei vorteilhafterweise so angeordnet, dass die magnetische Kraft senkrecht zur Richtung der Bohrspindeldrehachse auf dieses wenigstens eine Spannmittel, aus magnetischem und / oder magnetisierbarem Material wirkt. Wenn der Elektromagnet eingeschaltet ist, kann die magnetische Kraft den Berandungsbereich des Spannmittels relativ zur Bohrspindeldrehachse verschieben und/oder elastisch verformen. Sofern das wenigstens eine Spannmittel aus magnetischem oder magnetisierbarem Material in dem Bohrspindelgehäuse so angeordnet ist, dass es mit der Bohrmittelaufnahme zur Aufnahme des Bohrschaftes fluchtet, wenn die magnetische Kraft auf das Spannmittel wirkt, kann der Bohrschaft eines Bohrmittels in die Bohrspindel und in das Spannmittel aufgenommen werden, und, sobald die magnetische Kraft nicht mehr wirkt, weil beispielsweise der Elektromagnet ausgeschaltet worden ist, aufgrund der elastischen Beweglichkeit des Berandungsbereich zwischen der Bohrmittelaufnahme und der Durchführung des Spannmittels festgeklemmt werden.

In einer bevorzugten Ausführungsform ist das wenigstens eine Spannmittel relativ zum Bohrspindelgehäuse rotationsfest, vorzugsweise drehfest, in dem Bohrspindelgehäuse angeordnet. Rotationsfest soll in diesem Zusammenhang bedeuten, dass das wenigstens eine Spannmittel relativ zum Bohrspindelgehäuse um weniger als 360° verdrehbar angeordnet ist. Drehfest soll in diesem Zusammenhang bedeuten, dass das wenigstens eine Spannmittel relativ zum Bohrspindeldrehgehäuse um weniger als 3° verdrehbar angeordnet ist. Das wenigstens eine Spannmittel kann natürlich auch mit dem Bohrspindelgehäuse starr verbunden sein. Ein drehfest oder starr mit dem Bohrspindelgehäuse verbundenes Spannmittel wirkt stabilisierend auf einen in das Bohrspindelgehäuse aufgenommenen Bohrschaft eines Bohrmittels, weil dann der Berandungsbereich, der die Durchführung zur Aufnahme des Bohrschaftes umrandet, nur noch elastisch und geringfügig hin und her beweglich ist.

Die Bohrspindeldrehachse verläuft durch die Bohrmittelaufnahme des Bohrspindelgehäuses und die Durchführung des wenigstens einen Spannmittels, wobei in der bevorzugten Ausführungsform das wenigstens eine Spannmittel eine Spannscheibe ist.

In den bevorzugten Ausführungsformen weist das Bohrspindelgehäuse wenigstens zwei Spannmittel auf, die in dem Bohrspindelgehäuse so angeordnet sind, dass die Bohrspindeldrehachse durch die Durchführungen der wenigstens zwei Spannmittel verläuft und die wenigstens zwei Spannmittel und/oder deren Durchführungen relativ zueinander verschiebbar sind. Werden die Durchführungen der wenigstens zwei Spannmittel relativ zueinander verschoben, kann dadurch ein Festklemmen des Bohrschaftes eines Bohrmittels bewirkt werden.

In einer bevorzugten Ausführungsform weist das Bohrspindelgehäuse ein erstes Spannmittelpaar aus einem ersten und einem zweiten Spannmitteln auf, wobei die Massenschwerpunkte des ersten und zweiten Spannmittels außerhalb der Bohrspindeldrehachse angeordnet sind., Der Abstandsvektor von der Bohrspindeldrehachse zu dem Massenschwerpunkt des ersten Spannmittels des erstens Spannmittelpaars und der Abstandsvektor von der Bohrspindeldrehachse zu dem Massenschwerpunkt des zweiten Spannmittels des ersten Spannmittelpaars weisen in unterschiedliche, vorzugsweise einander entgegengesetzte Richtungen. Dadurch kann eine potentielle Unwucht bei der Rotation besser ausgeglichen werden. Dies ermöglicht einen vibrationsarmen Lauf, wenn die Spindel rotiert.

Um für einen optimalen Ausgleich solcher Unwuchten, die durch Massenschwerpunkte, welche außerhalb der Rotationsachse, hier der Bohrspindeldrehachse, liegen, verursacht sein könnten, zu sorgen, weist das wenigstens eine erste Spannmittelpaar zwei gleich gebaute Spannscheiben auf, die senkrecht zur Bohrspindeldrehachse um 180° gegeneinander verdreht, benachbart zueinander angeordnet sind. Die Spannscheiben sind dabei vorteilhafterweise so gegeneinander verdreht, dass die Bohrspindeldrehachse zwischen ihren Massenschwerpunkten, vorzugsweise mittig zwischen ihren Massenschwerpunkten, angeordnet ist.

In dem Bohrspindelgehäuse ist vorteilhafterweise auch wenigstens ein zweites Spannmittelpaar angeordnet, das wenigstens ein Spannmittel aufweist, welches zumindest teilweise aus einem magnetischen und / oder magnetisierbaren Material, vorzugsweise aus Eisen, besteht. Dadurch wird es möglich, einen in das Bohrspindelgehäuse aufgenommenen Bohrschaft eines Bohrmittels zunächst mit dem zweiten Spannmittelpaar auf der Bohrspindeldrehachse zu fixieren, und im Anschluss daran, wenn sich die Bohrspindel dreht, aufgrund der auf die Spannmittel des ersten Spannmittelpaars wirkenden Fliehkräfte den Bohrschaft mit dem ersten Spannmittelpaar festzuspannen. Damit das zweite Spannmittelpaar den Bohrmittelschaft möglichst nahe an der Bohrmittelaufnahme des Bohrspindelgehäuses fixiert, ist es bevorzugt benachbart zu der Bohrmittelaufnahme des Bohrspindelgehäuses angeordnet.

Damit der Bohrschaft mit dem zweiten Spannmittelpaar vorab fixiert werden kann, weist die Bohrspindel vorteilhafterweise einen Elektromagneten auf, dessen magnetische Kraft senkrecht zur Richtung der Bohrspindeldrehachse auf das wenigstens eine Spannmittel, das zumindest teilweise aus einem magnetischen oder magnetisierbaren Material besteht, des zweiten Spannmittelpaares wirkt.

Die Durchführungen des zweiten Spannmittelpaars sind vorzugsweise so entlang der Bohrspindeldrehachse angeordnet, dass während der Elektromagnet eingeschaltet ist, der Bohrschaft in den Durchführungen des zweiten Spannmittelpaars aufgenommen werden kann.

Das Verfahren zum Einspannen eines Bohrschaftes in die erfinderische Bohrspindel sieht daher folgende Verfahrensschritte vor:
Zunächst wird der Elektromagnet eingeschaltet, so dass der Bohrschaft des Bohrmittels durch die Bohrmittelaufnahme des Bohrspindelgehäuses, die Durchführungen des zweiten Spannmittelpaares und die Durchführungen des wenigstens einen ersten Spannmittelpaares aufgenommen werden kann. Nachdem der Bohrschaft in das Bohrspindelgehäuse eingeführt und in den Durchführungen aufgenommen worden ist, wird der Elektromagnet ausgeschaltet. Dadurch bewegen sich die beiden Durchführungen des zweiten Spannmittelpaares so gegeneinander, so dass der Bohrschaft entlang der Bohrspindeldrehachse in der Bohrspindel axial auf der Bohrspindeldrehachse fixiert wird. Nun wird die Bohrspindel in Rotation versetzt, sodass die auf die beiden Spannmittel des wenigstens einen ersten Spannmittelpaars wirkenden Fliehkräfte die Spannmittel des wenigstens einen ersten Spannmittelpaares so gegeneinander bewegen, dass die Berandungen ihrer Durchführungen den Bohrschft festklemmen. Zum Lösen des Bohrschaftes in der Bohrspindel wird dieses Verfahren in der umgekehrten Richtung ausgeführt.

In einer bevorzugten Ausführungsform weist die Bohrspindel ein Bohrspindelgehäuse auf, in welchem wenigstens ein erstes, vorzugsweise drei, erste Spannmittelpaare sowie wenigstens ein zweites Spannmittelpaar angeordnet sind. Durch die Verwendung mehrerer erster Spannmittelpaare kann einerseits der Bohrschaft axial stabiler fixiert werden, andererseits kann der Bohrschaft dadurch stärker festgeklemmt werden. Die Massenschwerpunkte der beiden Spannmittel des wenigstens einen ersten Spannmittelpaares sind dabei relativ zueinander so verschiebbar, dass sie, wenn die Bohrspindel um die Bohrspindeldrehachse rotiert, relativ zueinander so verschoben werden, dass der Bohrschaft des Bohrmittels in der Bohrspindel klemmend festgehalten wird.

Die in der nachfolgenden Beschreibung verwendeten Bezeichnungen wie "oben", "unten", "links", "rechts" und ähnliches beziehen sich auf die Ausführungsbeipiele und sollen in keiner Weise einschränkend sein, auch dann nicht, wenn sie sich auf bevorzugte Ausführungsformen beziehen.

Die Erfindung wird nachfolgend anhand von Zeichnungen näher erläutert. Es zeigen:
- Fig. 1: eine perspektivische Darstellung einer erfinderischen Bohrspindel,
- Fig. 2: eine seitliche Draufsicht auf die erfinderische Bohrspindel sowie eine Draufsicht auf die Vorderseite der erfinderischen Bohrspindel,
- Fig. 3: ein seitliches Schnittbild der erfinderischen Bohrspindel entlang der Schnittlinie C-C in Figur 2,
- Fig. 4: drei Schnittbilder durch die Bohrspindel entlang der Schnittlinie A-A in Figur 2, ohne den um die Spindel herum angeordneten Elektromagneten, und
- Fig. 5: drei Schnittbilder der erfinderischen Bohrspindel entlang der Schnittlinie B-B.

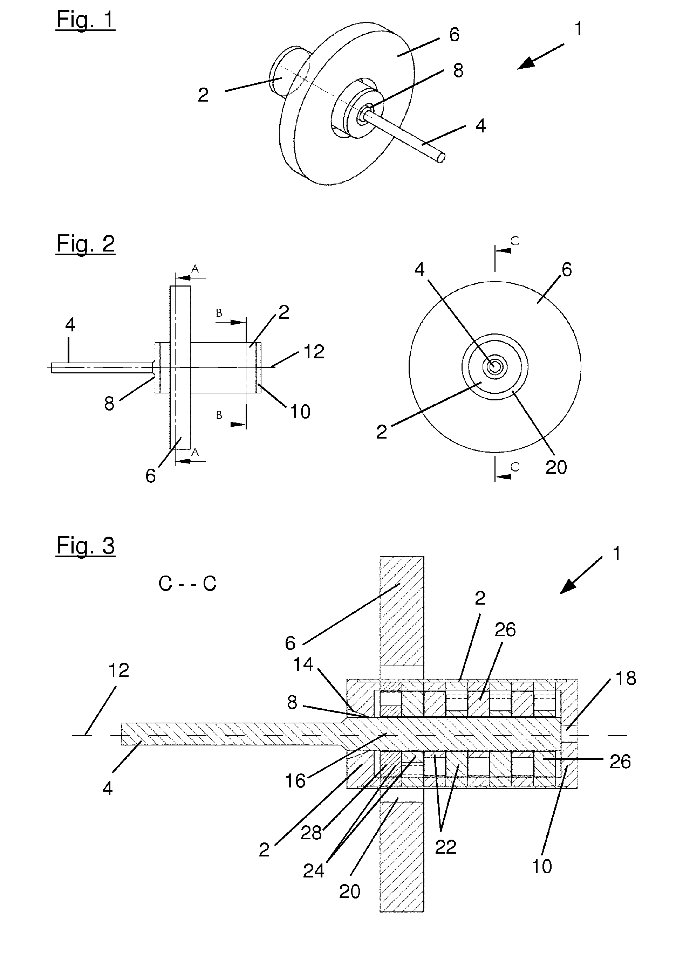

Figur 1 zeigt eine räumlich perspektivische Ansicht einer erfinderischen Bohrspindel 1 mit einem Bohrspindelgehäuse 2, in welches ein Bohrmittel 4 aufgenommen ist. Die Bohrspindel 1 ist von einem Elektromagneten 6 umgeben.

Figur 2 zeigt die Bohrspindel 1 in einer seitlichen Draufsicht (linke Figur) sowie in einer Draufsicht von vorne (rechte Figur). Das Bohrspindelgehäuse 2 ist zylinderförmig ausgebildet und weist eine Bohrmittelaufnahme 8 auf, durch die das Bohrmittel 4 in das Bohrspindelgehäuses 2 aufgenommen ist. Ein der Bohrmittelaufnahme 8 gegenüberliegend angeordneter rückseitiger Deckel 10 verschließt das Bohrspindelgehäuse 2. Das Bohrmittel 4 ist entlang einer Bohrspindeldrehachse 12 angeordnet.

Figur 3 zeigt einen Schnitt entlang der Schnittlinie C-C (siehe Figur 2 rechts) durch die erfinderische Bohrspindel 1. Das Bohrspindelgehäuse 2 ist zylinderförmig axial und rotationssymmetrisch um die Bohrspindeldrehachse 12 angeordnet. Die Bohrmittelaufnahme 8 weist eine Einführphase 14 auf, durch welche der Bohrschaft 16 des Bohrmittels 4 in das Bohrspindelgehäuse 2 aufgenommen ist. Der Bohrschaft 16 ist an dem Deckel 10, der eine Entlüftungsbohrung 18 aufweist, gehaltert. Die Längsseite des Bohrmittels 4 ist auf der Bohrspindeldrehachse 12, die die Bohrmittelaufnahme 8 und die Entlüftungsbohrung 18 axial durchdringt, angeordnet. Der Elektromagnet 6 ist, einen Längsabschnitt des Bohrspindelgehäuses 2 umlaufend um das Bohrspindelgehäuse 2 angeordnet. Er ist von dem Bohrspindelgehäuse 2 durch einen Luftspalt 20 beabstandet und statisch angeordnet, sodass sich die Bohrspindel 1 um die Bohrspindeldrehachse 12 drehen kann, ohne den Elektromagneten 6 zu berühren. In dem Bohrspindelgehäuse 2 sind drei erste Spannscheibenpaare 22 sowie ein zweites Spannscheibenpaar 24 angeordnet. Jedes erste Spannscheibenpaar weist zwei Spannscheiben 26 auf, das zweite Spannscheibenpaar weist zumindest eine Spannscheibe 28 auf, die ein magnetisches oder magnetisierbares Material aufweist.

Jedes erste Spannmittelpaar 22 weist zwei gleich gebaute Spannscheiben 26 auf, die senkrecht zur Bohrspindeldrehachse um 180° gegeneinander verdreht, benachbart zueinander angeordnet sind. Das zweite Spannscheibenpaar 24, das die Spannscheibe 28 aufweist, ist im vorliegenden Ausführungsbeispiel benachbart zur Bohrmittelaufnahme 8 in dem Bohrspindelgehäuse 2 angeordnet, entlang des gleichen Bohrspindeldrehachsenabschnitts, entlang dessen der Elektromagnet 6 angeordnet ist.

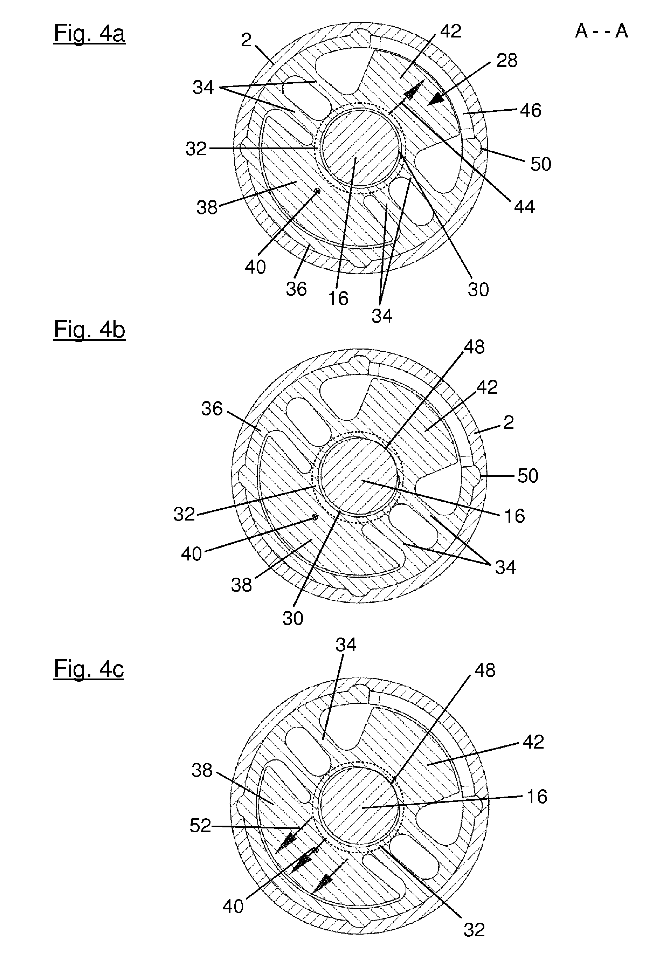

Figur 4 zeigt Schnittbilder durch das Bohrspindelgehäuse 2 entlang der Schnittlinie A-A (siehe Figur 2 links) durch die Spannscheibe 28. Die Spannscheibe 28 weist eine Durchführung 30 auf, durch welche der Bohrschaft 16 des Bohrmittels 4 hindurchgeführt ist. Die Durchführung 30 ist hier von einem Berandungsbereich 32 umrandet, welcher über eine elastische Halterung 34 mit dem Spannring 36 der Spannscheibe 28 verbunden ist. Die elastische Halterung 34 ist im vorliegenden Ausführungsbeispiel durch zwei Haltestegpaare 34 gebildet, die in dem Spannring 36 elastisch beweglich angeordnet und mit dem Spannring 36 und dem Berandungsbereich 32 einstückig ausgebildet sind. Zwischen den beiden Haltestegpaaren der elastischen Halterung 34 ist eine Schwungmasse 38 an dem Berandungsbereich 32 ausgebildet, die dafür sorgt, dass der Massenschwerpunkt 40 außerhalb der Bohrspindeldrehachse 12, und im vorliegenden Fall sogar außerhalb der Durchführung 30 liegt. Der Schwungmasse 38 gegenüberliegend ist ein magnetisierbarer Bereich 42 an dem Berandungsbereich 32 ausgebildet, der, wenn der Elektromagnet 6 eingeschaltet ist, aufgrund der in radiale Richtung wirkenden magnetischen Kraft 44 den elastisch gehalterten Berandungsbereich 32 in Richtung auf einen Freiraumbereich 46 bewegt und die Durchführung 30, in welcher der Bohrschaft 16 eingeführt ist, freigibt, damit das Bohrmittel 4 aus der Durchführung 30 herausgenommen werden und ausgetauscht werden kann.

Figur 4a zeigt einen Schnitt entlang der Schnittlinie A-A bei eingeschaltetem Elektromagneten 6.

Nachdem ein neuer Bohrschaft 16 in die Durchführung 30 eingeführt ist, kann der Elektromagnet 6 ausgeschaltet werden.

Die Figuren 4b und 4c zeigen einen Schnitt durch die Bohrspindel 1 entlang der Schnittlinie A-A, bei ausgeschaltetem Elektromagnet 6.

Sobald der Elektromagnet 6 ausgeschaltet ist und die magnetische Kraft 44 nicht mehr auf den magnetisierbaren Bereich 42 wirkt, bewegt sich der magnetisierbare Bereich 42 der Spannscheibe 28 aufgrund der elastischen Halterung 34 vom Freiraumbereich 46 weg. Dadurch verschiebt sich der die Durchführung 30 begrenzende Berandungsbereich 32 relativ zum Bohrschaft 16 des in das Bohrspindelgehäuse 2 axial zur Bohrspindeldrehachse 12 aufgenommenen Bohrmittels 4, sodass die Innenfläche des Berandungsbereiches 32 den Bohrschaft 16 an einem Klemmpunkt 48 berührt und ihn an dem Klemmpunkt 48 fixiert, da sich die Lage der Durchführung 30 relativ zu der Bohrspindeldrehachse 12 und relativ zu der Bohrmittelaufnahme 8 verschiebt.

Der Spannring 36 der Spannscheibe 28 ist formschlüssig in dem Bohrspindelgehäuse 2 angeordnet und über eine Verdrehsicherung 50 drehfest mit dem Bohrspindelgehäuse 2 verbunden. Die Verdrehsicherung 50 ist im vorliegenden Ausführungsbeispiel als Ausformung an dem Spannring 36 ausgebildet, welche in eine im Inneren des Bohrspindelgehäuses 2 angeordnete Nut formschlüssig eingreift. Auf diese Weise kann eine Rotation des Bohrspindelgehäuses 2 um die Bohrspindeldrehachse 12 über die sich mitdrehende Spannscheibe 28 und den Klemmpunkt 48 auf den Bohrschaft 16 des Bohrmittels 4 übertragen werden, sodass das Bohrmittel 4, wenn das Bohrspindelgehäuse 2 um die Bohrspindeldrehachse 12 rotiert, ebenfalls, und mit gleicher Winkelgeschwindigkeit, um die Bohrspindeldrehachse 12 rotiert.

Figur 4c zeigt einen Schnitt durch die Bohrspindel 1 entlang der Schnittlinie A-A, wenn die Bohrspindel 1 um die Bohrspindeldrehachse 12 rotiert. Aufgrund des auf der Schwungmasse 38 angeordneten Massenschwerpunktes 40, der dem magnetischen und / oder magnetisierbaren Bereich 42 gegenüberliegend angeordnet ist, wirkt auf die Schwungmasse 38 eine Fliehkraft 52, welche die Schwungmasse 38 in Richtung auf den Spannring 36 versucht zu bewegen. Aufgrund dieser Fliehkraft 52 drückt die Innenfläche des Berandungsbereiches 32 an dem Klemmpunkt 48 stärker gegen den Bohrschaft 16, als in dem Fall, in dem die Bohrspindeldrehachse noch nicht rotiert, was die Kopplung zwischen dem Bohrmittel 4 und der Spannscheibe 28 verstärkt, sodass die Rotation des Bohrspindelgehäuses 2 besser auf das Bohrmittel 4 übertragen wird.

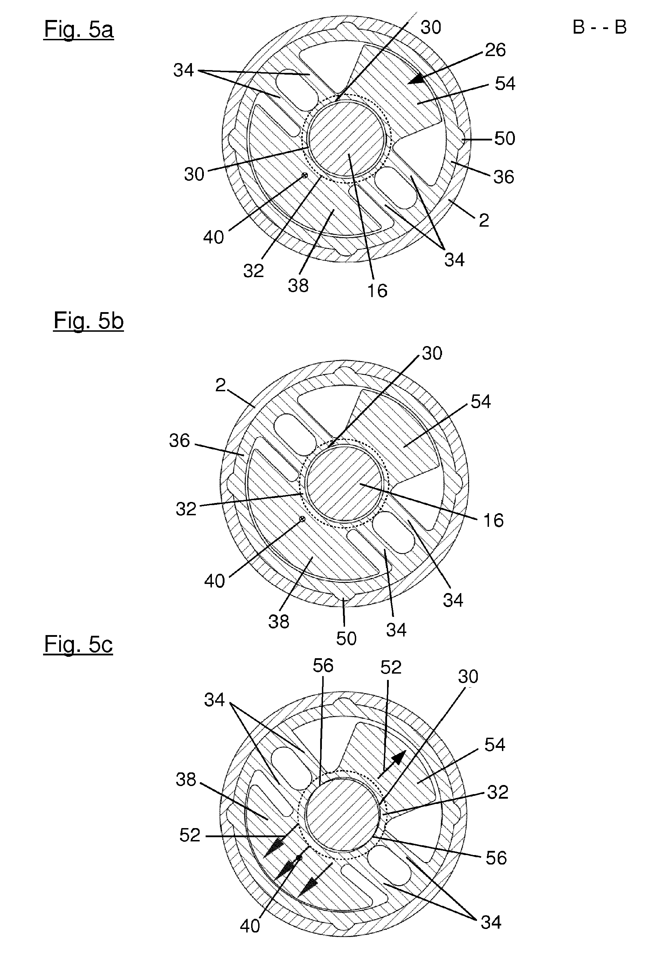

Figur 5 zeigt einen Schnitt durch die Bohrspindel 1 entlang der Schnittlinie B-B durch die Spannscheibe 26. Der Bohrschaft 16 des Bohrmittels 4 ist in der Durchführung 30 der Spannscheibe 26 angeordnet. Der Berandungsbereich 32 der Spannscheibe 26 umrandet die Durchführung 30. Ebenso wie bei der in Figur 4 dargestellten Spannscheibe 28 wird auch hier der Berandungsbereich 32 der Spannscheibe 26 von zwei elastischen Halterungspaaren 34, die einstückig mit dem Spannring 36 ausgebildet sind, gehalten. Die beiden elastischen Halterungspaare 34 sind einander gegenüberliegend angeordnet. Zwischen den beiden elastischen Halterungspaaren 34 ist auf einer Seite an dem Berandungsbereich 32 eine Schwungmasse 38 angeformt. Auf der der einen Seite gegenüberliegenden Seite ist eine zweite Schwungmasse 54, die im Unterschied zu der in Figur 4 offenbarten Schwungscheibe 28 nicht aus einem magnetisierbaren oder magnetischen Material bestehen muss, an dem Berandungsbereich 32 angeformt. Der Spannring 36 der Spannscheibe 26 ist in der Verdrehsicherung 50 drehfest mit dem Bohrspindelgehäuse 2 verbunden und, im Gegensatz zu dem Spannring 36 der Spannscheibe 28, als vollständiger Ring ausgebildet. Die beiden Schwungmassen 38, 54 sind von dem Spannring 36 beabstandet, so dass sie, wenn das Bohrspindelgehäuse 2 rotiert, Fliehkräfte in entgegengesetzte Richtungen initiieren, welche die Berandung 32 elastisch deformieren können.

Die Figuren 5a und 5b zeigen die Anordnung, wenn das Bohrspindelgehäuse 2 nicht rotiert. Der Bohrschaft 16 ist in diesem Fall nicht mit der Spannscheibe 26 gekoppelt, sodass er gegen die Spannscheibe 26 verdrehbar ist. Der Massenschwerpunkt 40 kann beispielsweise auf oder in der Schwungmasse 38 angeordnet sein. Er kann im vorliegenden Fall jedoch auch direkt auf der Bohrspindeldrehachse angeordnet sein.

Figur 5a zeigt den Schnitt durch die Bohrspindel 1 entlang der Schnittlinie B-B, solange der Elektromagnet 6 angeschaltet ist, während Figur 5b den gleichen Schnitt zeigt, während der Elektromagnet ausgeschaltet ist. Zwischen den Figuren 5a und 5b ist kein Unterschied erkennbar, weil die magnetische Kraft nicht auf die Spannscheibe 26 wirkt.

Figur 5c zeigt einen Schnitt entlang der Schnittlinie B-B, während die Bohrspindel 1 und das Bohrspindelgehäuse 2 rotieren. Aufgrund der Fliehkraft 52 wird die Schwungmasse 38 gegen den Innenrand des Spannringes 36 gedrückt und die der Schwungmasse 38 gegenüberliegend angeordnete zweite Schwungmasse 54 wird in die entgegengesetzte Richtung gedrückt, sodass, je nach Lage des Massenschwerpunktes 40, der Berandungsbereich 32 elastisch verschoben und gleichzeitig elastisch verformt, oder nur elastisch verschoben, oder nur elastisch verformt wird.

Die in dem nicht rotierenden Zustand im Querschnitt senkrecht zur Bohrspindeldrehachse kreisförmig ausgebildete Durchführung 30 wird im vorliegenden Ausführungsbeispiel elastisch verformt und bekommt dadurch einen ovalen Querschnitt, sodass der Bohrschaft 16 an zwei Klemmpunkten 56, 58 den Innenrand des Berandungsbereiches 32 kontaktiert und den Bohrschaft 16 auf diese Weise bereits allein in der Spannscheibe 26 festklemmt.

Liegt der Massenschwerpunkt der Spannscheibe 26 näher an der Bohrspindeldrehachse 12, um welche sich das Bohrspindelgehäuse 2 und die Spannscheibe 26 drehen, wird der Berandungsbereich 32 stärker verformt, jedoch dafür weniger relativ zum Bohrspindelgehäuse 2 verschoben. Ist andererseits der Massenschwerpunkt 40 weiter von der Bohrspindeldrehachse 12 entfernt angeordnet, beispielsweise auf der Schwungmasse 38, wird der Berandungsbereich 32 stärker in Richtung Massenschwerpunkt verschoben, dafür jedoch weniger deformiert. Je nachdem, welches Ergebnis gewünscht wird, kann daher beispielsweise die Spannscheibe 26 so ausgebildet werden, dass der Massenschwerpunkt 40 näher oder weiter entfernt der Bohrspindeldrehachse angeordnet ist. Die Verschiebung und/oder Verformung des Berandungsbereiches 32 wird dadurch ermöglicht, dass die erste Schwungmasse 38 und die zweite Schwungmasse 54 beabstandet zum Spannring 36 angeordnet sind, sofern das Bohrspindelgehäuse 2 nicht rotiert. Die beiden Schwungmassen 38 und 54 können sich daher in unterschiedliche, im vorliegenden Fall entgegengesetzte, Richtungen bewegen, wenn die Bohrspindel 1 rotiert, so dass eine elastische Verformung des Berandungsbereichs 32 bewirkt wird.

Die Spannscheiben sind, wie im vorliegenden Ausführungsbeispiel anhand von Figur 3 dargestellt ist, paarweise in dem Bohrspindelgehäuse 2 benachbart zueinander und um 180° gegeneinander verdreht angeordnet und sie weisen gleichen Aufbau auf. Dadurch wird über die gesamte Länge des Bohrspindelgehäuses 2 entlang der Bohrspindeldrehachse sichergestellt, dass der Bohrschaft 16 des Bohrmittels 4 in der Bohrspindel 1 festgeklemmt gehalten wird, wenn die Bohrspindel 1 um die Bohrspindeldrehachse 12 rotiert und der Systemschwerpunkt, der sich aus den Massenschwerpunkten aller Spannscheiben 26, 28 ergibt, auf der Bohrspindeldrehachse liegt, auch dann, wenn das Bohrspindelgehäuse rotiert. Dadurch wird sichergestellt, dass die Rotation weitgehend vibrationsfrei und ohne Unwucht erfolgen kann.

Die Erfindung wurde anhand bevorzugter Ausführungsbeispiele erläutert, ohne auf diese Ausführungsbeispiele beschränkt zu sein. So ist es beispielsweise möglich, dass das zweite Spannmittelpaar 24 zwei Spannscheiben 28 aufweist, die zum Beispiel gegeneinander um 180° oder einen anderen Winkel verdreht, entlang der Bohrspindeldrehachse 12 angeordnet sein können. Auch ist es möglich, eine Bohrspindel 1 vorzusehen, die entlang der Bohrspindeldrehachse nur Spannscheiben 28 oder zweite Spannscheibenpaare 24 aufweist, wobei in diesem Fall sich der Elektromagnet 6 beispielsweise entlang des Bohrspindelgehäuses 2 erstrecken kann, sodass er, wenn er eingeschaltet ist, eine Aufnahme für den Bohrschaft 16 eines Bohrmittels 4 bereitstellt und wenn er ausgeschaltet ist, den Bohrschaft 16 mit Hilfe der Spannscheiben 28 in dem Bohrspindelgehäuse 2 festklemmt. Die Merkmale der einzelnen Ausführungsformen sind somit frei mit funktionell gleichwirkenden Merkmalen anderer Ausführungsformen kombinierbar oder austauschbar, sofern Kompatibilität vorliegt.

### Bezugszeichenliste

- 1: Bohrspindel
- 2: Bohrspindengehäuse
- 4: Bohrmittel
- 6: Elektromagnet
- 8: Bohrmittelaufnahme

- 10: Deckel
- 12: Bohrspindeldrehachse
- 14: Einführphase
- 16: Bohrschaft
- 18: Entlüftungsbohrung

- 20: Luftspalt
- 22: erstes Spannscheibenpaar
- 24: zweites Spannscheibenpaar
- 26: Spannmittel, Spannscheibe des ersten Spannmittelpaares
- 28: magnetische Spannscheibe des zweiten Spannmittelpaares

- 30: Durchführung
- 32: Berandung, Randbereich, Berandungsbereich
- 34: elastische Halterung
- 36: Spannring des Spannmittels
- 38: Schwungmasse

- 40: Massenschwerpunkt
- 42: magnetisierbarer Bereich
- 44: magnetische Kraft
- 46: Freiraumbereich
- 48: Klemmpunkt

- 50: Verdrehsicherung
- 52: Fliehkraft
- 54: zweite Schwungmasse
- 56: Klemmpunkte
- 58: Klemmpunkte

## Patentansprüche

1. Bohrspindel (1), aufweisend eine Bohrspindeldrehachse (12), ein Bohrspindelgehäuse (2) mit einer Bohrmittelaufnahme (8) zur Aufnahme des Bohrschafts (16) eines Bohrmittels (4), sowie wenigstens ein Spannmittel (26, 28) zum Halten und Fixieren des Bohrschafts (16) entlang der Bohrspindeldrehachse (12),
**dadurch gekennzeichnet, dass** das wenigstens eine Spannmittel (26, 28) in dem Bohrspindelgehäuse (2) angeordnet ist und einen Berandungsbereich (32) aufweist, der eine Durchführung (30) zur Aufnahme des Bohrschafts (16) umrandet, wobei der Berandungsbereich (32) senkrecht zu der Richtung der Bohrspindeldrehachse (12) in dem Bohrspindelgehäuse (2) verschiebbar und/oder elastisch verformbar angeordnet ist.

2. Bohrspindel (1) nach Anspruch 1,
**dadurch gekennzeichnet, dass** das wenigstens eine Spannmittel (26, 28) in Richtung der Bohrspindeldrehachse (12) fixiert in dem Bohrspindelgehäuse (2) angeordnet ist.

3. Bohrspindel (1) nach Anspruch 1 oder 2,
**dadurch gekennzeichnet, dass** die Bohrspindel (1) eine Hochfrequenzspindel ist.

4. Bohrspindel (1) nach einem der vorigen Ansprüche,
**dadurch gekennzeichnet, dass** das wenigstens eine Spannmittel (26, 28) in dem Bohrspindelgehäuse (2) senkrecht zur Bohrspindeldrehachse (12) verschiebbar angeordnet ist.

5. Bohrspindel (1) nach einem der vorigen Ansprüche,
**dadurch gekennzeichnet, dass** der Berandungsbereich (32) in dem wenigstens einen Spannmittel (26, 28) elastisch verschiebbar, und/oder elastisch verformbar angeordnet ist.

6. Bohrspindel (1) nach einem der vorigen Ansprüche,
**dadurch gekennzeichnet, dass,** der Berandungsbereich (32) sich relativ zu der Bohrspindeldrehachse (12) verschiebt und/oder sich elastisch verformt, wenn die Bohrspindel (1) um die Bohrspindeldrehachse (12) rotiert.

7. Bohrspindel (1) nach einem der vorigen Ansprüche,
**dadurch gekennzeichnet, dass,** wenn der Bohrschaft (16) in der Bohrmittelaufnahme (8) und in der Durchführung (30) des wenigstens einen Spannmittels (26, 28) aufgenommen ist und die Bohrspindel (1) um die Bohrspindeldrehachse (12) rotiert, die auf das wenigstens eine Spannmittel (26, 28) wirkende Fliehkraft (52) einen Teil der zum Bohrschaft (16) weisende Innenfläche des Berandungsbereichs (32) gegen den Bohrschaft (16) drückt, so dass der Bohrschaft (16) in dem Bohrspindelgehäuse (2) geklemmt und/oder eingespannt gehalten wird.

8. Bohrspindel (1) nach einem der vorigen Ansprüche,
**dadurch gekennzeichnet, dass** das wenigstens eine Spannmittel (28) ein magnetisches oder magnetisierbares Material, vorzugsweise Eisen, aufweist.

9. Bohrspindel (1) nach Anspruch 8,
**dadurch gekennzeichnet, dass** der Berandungsbereich (32) sich relativ zur Bohrspindeldrehachse (12) verschiebt und/oder sich elastisch verformt, wenn eine magnetische Kraft (44) senkrecht zur Richtung der Bohrspindeldrehachse (12) auf das wenigstens eine Spannmittel (28) wirkt.

10. Bohrspindel (1) nach Anspruch 8 oder 9,
**dadurch gekennzeichnet, dass** außerhalb des Bohrspindelgehäuses (2) ein auf das wenigstens eine Spannmittel (28) gerichteter Elektromagnet (6) angeordnet ist.

11. Bohrspindel (1) nach einem der vorigen Ansprüche,
**dadurch gekennzeichnet, dass** der Massenschwerpunkt (40) des wenigstens einen Spannmittels (26, 28) außerhalb der Bohrspindeldrehachse (12), vorzugsweise außerhalb der Durchführung (30) angeordnet ist.

12. Bohrspindel (1) nach einem der vorigen Ansprüche,
**dadurch gekennzeichnet, dass** das wenigstens eine Spannmittel (26, 28) relativ zum Bohrspindelgehäuse (2) rotationsfest, vorzugsweise drehfest, in dem Bohrspindelgehäuse (2) angeordnet ist, oder mit dem Bohrspindelgehäuse (2) starr verbunden ist.

13. Bohrspindel (1) nach einem der vorigen Ansprüche,
**dadurch gekennzeichnet, dass** das wenigstens eine Spannmittel (26, 28) einen Spannring (36) aufweist, sowie wenigstens eine an den Spannring angeformte elastische Halterung (34), die den Berandungsbereich (32) mit dem Spannring (36) elastisch verbindet.

14. Bohrspindel (1) nach einem der vorigen Ansprüche,
**dadurch gekennzeichnet, dass** die Bohrspindeldrehachse (12) durch die Bohrmittelaufnahme (8) des Bohrspindelgehäuses (2) und die Durchführung (30) des wenigstens einen Spannmittels (26, 28) verläuft, wobei das wenigstens eine Spannmittel (26, 28) eine Spannscheibe (26, 28) ist.

15. Bohrspindel (1) nach einem der vorigen Ansprüche,
**dadurch gekennzeichnet, dass** das Bohrspindelgehäuse (2) wenigstens zwei Spannmittel (26, 28) aufweist, die in dem Bohrspindelgehäuse (2) so angeordnet sind, dass die Bohrspindeldrehachse (12) durch die Durchführungen (30) der wenigstens zwei Spannmittel (26, 28) verläuft, und die wenigstens zwei Spannmittel (26, 28) und/oder deren Durchführungen (30) relativ zueinander verschiebbar sind.

16. Bohrspindel (1) nach einem der vorigen Ansprüche,
**dadurch gekennzeichnet, dass** das Bohrspindelgehäuse (2) ein erstes Spannmittelpaar (22) aus zwei Spannmitteln (26) aufweist, deren Massenschwerpunkte (40) außerhalb der Bohrspindeldrehachse (12) angeordnet sind, wobei der Abstandsvektor von der Bohrspindeldrehachse (12) zu dem Massenschwerpunkt (40) des ersten Spannmittels (26) und der Abstandsvektor von der Bohrspindeldrehachse (12) zu dem Massenschwerpunkt (40) des zweiten Spannmittels (26) in unterschiedliche, vorzugsweise einander entgegengesetzte Richtungen weisend angeordnet sind.

17. Bohrspindel (1) nach Anspruch 16,
**dadurch gekennzeichnet, dass** das wenigstens eine erste Spannmittelpaar (22) zwei gleichgebaute Spannscheiben (26) aufweist, die senkrecht zur Bohrspindeldrehachse (12) um 180 Grad gegeneinander verdreht, benachbart zueinander angeordnet sind.

18. Bohrspindel (1) nach Anspruch 16 oder 17,
**dadurch gekennzeichnet, dass** in dem Bohrspindelgehäuse (2) wenigstens ein zweites Spannmittelpaar (24) angeordnet ist, das wenigstens ein Spannmittel (28) aufweist, welches zumindest teilweise aus einem magnetischen oder magnetisierbaren Material, vorzugsweise aus Eisen besteht.

19. Bohrspindel (1) nach Anspruch 18,
**dadurch gekennzeichnet, dass** das Bohrspindelgehäuse (2) wenigstens ein erstes, vorzugsweise drei erste Spannmittelpaare (22), sowie wenigstens ein zweites Spannmittelpaar (24) aufweist.

20. Bohrspindel (1) nach einem der Ansprüche 16 bis 19,
**dadurch gekennzeichnet, dass,** die Massenschwerpunkte (40) der beiden Spannmittel (26) des wenigstens einen ersten Spannmittelpaars (22) relativ zueinander so verschiebbar sind, dass sie relativ zueinander verschoben werden, wenn die Bohrspindel (1) um die Bohrspindeldrehachse (12) rotiert.

21. Verfahren zum Einspannen eines Bohrschafts (16) in eine Bohrspindel (1) nach Anspruch 10 und einem der Ansprüche 18 bis 20,
**dadurch gekennzeichnet, dass** der Elektromagnet (6) eingeschaltet wird, dann der Bohrschaft (16) durch das zweite Spannmittelpaar (24) und das wenigstens eine erste Spannmittelpaar (22) in das Bohrspindelgehäuse (2) eingeführt wird, dann der Elektromagnet (6) ausgeschaltet wird, wobei der Bohrschaft (16) von dem zweiten Spannmittelpaar (24) festgehalten wird, und die Bohrspindel (1) anschließend um die Bohrspindeldrehachse (12) so in Rotation versetzt wird, dass der Bohrschaft (16) von dem wenigstens einem ersten Spannmittelpaar (22) festgeklemmt wird.
